# EUROPEAN PATENT APPLICATION

(11) **EP 4 542 709 A1**
(43) Date of publication of application: **23.04.2025**
(21) Application number: 22950740.5
(22) Date of filing: 15.07.2022
(51) Int. Cl.: H01M 10/0567

(54) **SECONDARY BATTERY, BATTERY MODULE, BATTERY PACK, AND ELECTRICAL APPARATUS**

(71) Applicant: Contemporary Amperex Technology Co., Limited, Jiaocheng District Ningde Fujian 352100 (CN)
(72) Inventor: GUO, Jie, Ningde, Fujian 352100 (CN); WU, Zeli, Ningde, Fujian 352100 (CN); HAN, Changlong, Ningde, Fujian 352100 (CN); WANG, Guan, Ningde, Fujian 352100 (CN); JIANG, Bin, Ningde, Fujian 352100 (CN)
(74) Representative: Gong, Jinping
(86) International application number: PCT/CN2022/106083
(87) International publication number: WO 2024/011622

(57) **Abstract**

The present application provides a secondary battery, a battery module, a battery pack, and an electrical device. The secondary battery includes a positive electrode plate and an electrolytic solution; the positive electrode plate including a positive electrode active material; the electrolytic solution includes a boron-containing salt; a mass percentage of the boron-containing salt based on the total mass of the electrolytic solution is denoted as A%; an upper-limit potential of the positive electrode active material with respect to lithium metal is denoted as V₁ (V); and the secondary battery satisfies: 0 < A/(V₁-4.1) ≤ 4 and V₁ > 4.1; optionally, 0 < A/(V₁-4.1) ≤ 3. The present application is capable of improving the cycle capacity retention and cycle DCR growth rate of secondary batteries.

## Description

### TECHNICAL FIELD

The present application belongs to the technical field of battery, in particular to a secondary battery, a battery module, a battery pack, and an electrical device.

### BACKGROUND

Secondary batteries have characteristics of high capacity, long service life, and the like, and thus have been widely used in electronic devices, such as mobile phones, notebook computers, scooters, electric vehicles, electric airplanes, electric ships, electric toy cars, electric toy ships, electric toy planes, and electric tools.

With increasingly wide use of batteries, requirements for performances of secondary batteries are increasingly stringent, such as the requirement of better cycle capacity retention and lower cycle DCR growth rate, so how to improve the cycle capacity retention and cycle DCR growth rate is also a problem that needs to be solved urgently.

### SUMMARY

The present application is based on the foregoing topic and aims to provide a secondary battery, a battery module, a battery pack, and an electrical device.

A first aspect of the present application provides a secondary battery comprising: a positive electrode plate comprising a positive electrode active material, and an electrolytic solution; wherein the electrolytic solution comprises a boron-containing salt, the boron-containing salt comprises one or more of the compounds shown in Formula 1, Formula 2, and Formula 3, 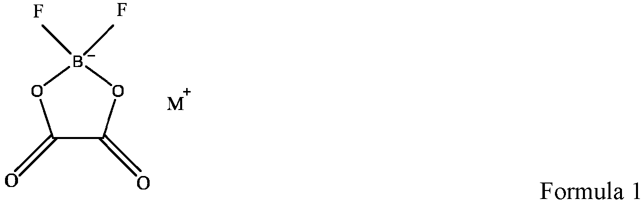 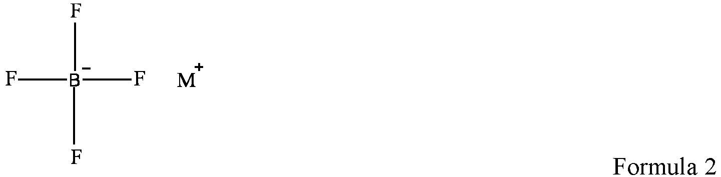 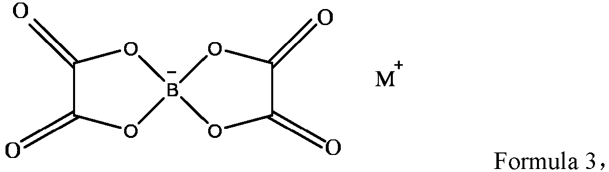 in which, M is each independently selected from Li, Na, or K; a mass percentage of the boron-containing salt based on the total mass of the electrolytic solution is denoted as A%; the upper-limit potential of the positive electrode active material with respect to the lithium metal is denoted as V₁ (V); and the secondary battery satisfies: 0 < A/(V₁-4.1) ≤ 4 and V₁ > 4.1; optionally, 0 < A/(V₁-4.1) ≤ 3.

In the above technical solution, the secondary battery of the present application satisfies the range as described above, and under a high voltage system, the boron-containing salt is able to form a dense and stable CEI film on the surface of the positive electrode active material, which plays a good protective role for the positive electrode active material, and is able to reduce the risk of the positive electrode active material coming into contact with the electrolytic solution and undergoing a side reaction, so as to make the transition metal in the positive electrode active material less prone to redox reaction, and it is not easy for cation mixing to occur in the positive electrode active material, which is conducive to the de-embedding of metal ions, thus ensuring the capacity exertion and the structural stability of the positive electrode active material, and enhancing the cyclic capacity retention rate of the secondary battery. The positive electrode active material and the electrolytic solution are less likely to have side reactions to produce by-products such as oxygen, etc., and the secondary battery is able to ensure that the voltage within the secondary battery is in a normal state during the charging and discharging cycle, so as to ensure the safety performance of the secondary battery. In addition, the present application can improve the cyclic DCR growth rate of the secondary battery during cycling.

In some embodiments, 4.1 < V1 ≤ 4.6. the positive electrode active material has a relatively high upper-limit potential V₁ with respect to the lithium metal, which is suitable for charging and discharging under the high-voltage system; and with the combination of the above positive electrode active material and the boron-containing salt, the boron-containing salt can sufficiently protect the surface of the positive electrode active material, thereby ensuring the structural stability of the positive electrode active material under the high-voltage system.

In some embodiments, the secondary battery further comprises a negative electrode plate, the negative electrode plate comprises a negative electrode active material, the upper-limit potential of the negative electrode active material with respect to the lithium metal is recorded as V₂ (V); the secondary battery satisfies: 0 < A × V₂ ≤ 1.2; optionally, 0 < A × V₂ ≤ 1. The boron salt has a relatively high reduction potential, and is also able to participate in anode film formation to form a high densities and stable SEI film. The SEI film can form sufficient protection on the surface of the negative electrode active material, reduce the risk of a side reaction occurring when the negative electrode active material and the electrolytic solution come into contact, thereby alleviating the risk of the organic solvents in the electrolytic solution being reduced, and further improving the cycling stability of the secondary battery.

In some embodiments, 0.02 ≤ V2 ≤ 2.5; optionally, 0.1 ≤ V2 ≤ 2. The above negative electrode active material is suitable for charging and discharging under the high-voltage system; and with the combination of the negative electrode active material and the boron-containing salt, the boron-containing salt can sufficiently protect the surface of the positive electrode active material, thereby ensuring the structural stability of the positive electrode active material under the high-voltage system.

In some embodiments, the negative electrode active material comprises at least one of artificial graphite, natural graphite, soft carbon, hard carbon, and silicon-based materials.

In some embodiments, 0 < A ≤ 2. When the amount of the boron-containing salt is in the above range, it is capable of forming a dense and stable CEI film on the surface of the positive electrode active material, so as to adequately protect the positive electrode active material and improve the structural stability of the positive electrode active material, so as to ensure the cycle stability of the secondary battery. Moreover, the boron-containing salt can also take into account the formation of an SEI film on the surface of the negative electrode active material, improving the protective effect on the negative electrode active material.

In some embodiments, the boron-containing salt comprises the compound shown in Formula 1, the compound shown in Formula 2, and the compound shown in Formula 3; optionally, the compound shown in Formula 1 comprises lithium difluorooxalate borate and/or sodium difluorooxalate borate; and/or the compound shown in Formula 2 comprises lithium tetrafluoroborate and/or sodium tetrafluoroborate; and/or the compound shown in Formula 3 comprises lithium bis(oxalate)borate and/or sodium bis(oxalate)borate.

In some embodiments, the electrolytic solution further comprises one or more of lithium hexafluorophosphate LiPF₆, lithium perchlorate LiClO₄, lithium hexafluoroarsenate LiAsF₆, lithium bisfluorosulfonimide LiFSI, lithium bis(trifluoromethylsulfonyl)imide LiTFSI, lithium trifluoromethane sulfonate LiTFS, lithium difluorophosphate LiPO₂F₂, lithium difluorodioxalate phosphate LiDFOP, lithium tetrafluorooxalate phosphate LiTFOP, sodium hexafluorophosphate NaPF₆, sodium bifluorosulfonimide NaFSI, sodium difluorophosphate NaPO₂F₂, sodium bis(trifluoromethylsulfonyl)imide NaTFSI, and sodium fluorosulfonate NaFSO₃. The above lithium salts and boron-containing salts, when used in combination, can improve the conductivity of the electrolytic solution.

In some embodiments, the electrolytic solution further comprises a film-forming additive, the film-forming additive comprising one or more of a carbonate additive, a sulfate additive, a sulfite additive, a phosphate additive, and a polynitrile additive; optionally, based on the total mass of the electrolytic solution, the mass percentage d of the film-forming additive satisfies: 0.5% ≤ d ≤ 10%; optionally, 1%≤d≤6%. The negative electrode film-forming additive is capable of forming an SEI film on the surface of the negative electrode active material, and the multiple components together forming a film on the surface of the SEI film is capable of enriching the film structure of the SEI film and improving the structural stability of the SEI film.

In some embodiments, the carbonate additive comprises a cyclic carbonate additive and/or a linear carbonate additive; optionally, the cyclic carbonate additive comprises one or more of vinylidene carbonate VC, fluoroethylene carbonate FEC, difluoroethylene carbonate DFEC, vinyl ethylene carbonate VEC, and dicaprylyl carbonate CC; and/or the linear carbonate additives comprises one or more of allyl ethyl carbonate AEC, diphenyl carbonate DPC, methyl allyl carbonate PMC, and vinyl acetate VA.

In some embodiments, the sulfate additive includes a cyclic sulfonate additive and/or a hydrocarbyl sulfate additive; optionally, the cyclic sulfonate additive includes one or more of 1,3-propane sultone PS, propene sultone PES, and 3-fluoro-1,3-propane sultone FPS.

In some embodiments, the hydrocarbyl sulfate additive includes one or more of ethylene sulfate DTD, diethyl sulfate DES, and dimethyl sulfate DMS; and/or the sulfite additive includes ethylene sulfite ES and/or vinyl ethylene sulfite VES.

In some embodiments, the phosphate additive comprises one or more of tris(trimethylsilane) phosphate, triallyl phosphate, trimethyl phosphate, and triethyl phosphate.

In some embodiments, the polynitrile additive comprises one or more of toluene diisocyanate, hexamethylene diisocyanate, adiponitrile, toluene diisocyanate, hexamethylene diisocyanate.

In some embodiments, the electrolytic solution further comprises an organic solvent, the organic solvent comprising one or more of ethylene carbonate EC, propylene carbonate PC, methyl ethyl carbonate EMC, diethyl ethyl carbonate DEC, dimethyl methyl carbonate DMC, dipropyl carbonate DPC, methyl propyl carbonate MPC, ethyl propyl carbonate EPC, butylene carbonate BC, methyl formate MF, methyl acetate MA, ethyl acetate EA, propyl acetate PA, methyl propionate MP, ethyl propionate EP, propyl propionate PP, methyl butyrate MB, ethyl butyrate EB, 1,4-butyrolactone GBL, sulfolane SF, dimethyl sulfone MSM, methyl ethyl sulfone EMS and diethyl sulfone ESE.

In some embodiments, the positive electrode active material comprises a compound having a molecular formula LiNiₓCo_{y}M_{1-x-y}, wherein M represents one or more of Mn, Fe, Mg, Al, Cu, and Ti, x ≥ 0.5, 0 ≤ y ≤ 0.2, and x + y ≤ 1.

A second aspect of the present application further provides a battery module, including the secondary battery according to any embodiment of the first aspect of the present application.

A third aspect of the present application further provides a battery pack, including the battery module according to the embodiment of the second aspect of the present application.

A fourth aspect of the present application further provides an electrical device, including the secondary battery according to any embodiment of the first aspect of the present application, the battery module according to the embodiment of the second aspect of the present application, or the battery pack according to the embodiment of the third aspect of the present application.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power source.

The drawings are not drawn to actual scale.

Reference numerals are as follows:
1. Battery pack; 2. Upper box body; 3. Lower box body; 4. Battery module;
5. Secondary battery; 51. Housing; 52. Electrode assembly;
53. Cover plate; and
6. Electrical device.

### DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of" mean two or more.

In the present application, the secondary battery may include a lithium-ion battery, a lithium-sulfur battery, a sodium-lithium-ion battery, a sodium-ion battery, or a magnesium-ion battery, etc., and the embodiments of the present application are not limited thereto.

With the application and promotion of the secondary battery, its comprehensive performance has received more and more attention. Taking the secondary battery as a lithium-ion battery as an example, the positive electrode active material, as a lithium embedded compound and a component providing active lithium ions, has a direct impact on the overall performance of the lithium-ion battery due to the stability of its material structure. The positive electrode active material at high voltage will have a large amount of lithium deintercalation during the charging process of the secondary battery, which leads to an extremely high content of high-valent transition metals such as Co⁴⁺ and Ni⁴⁺ in the positive electrode active material. The transition metals in the high oxidation state are easily reduced by the electrolyte, thus generating transition metals in the low valence state, and such transition metals may occur cation mixing, occupying the lithium position, so that a portion of lithium ions migrating during the discharging process cannot return to the lithium position, resulting in the loss of the capacity of the positive electrode active material. At the same time, the oxygen on the lattice surface of the positive electrode active material is easy to be taken away by the electrolytic solution due to its instability, and the electrolytic solution undergoes a side reaction or is released in the form of oxygen, and due to the reaction between the oxygen and the electrolytic solution, oxygen vacancies are left on the surface of the lattice, and the transition metal is unstable and may migrate, thus making the positive electrode active material undergo a phase transition, which hinders the migration of Li⁺ on the surface of the positive electrode and results in an increase in the impedance; the phase transition on the surface increases with the increasing voltage, and as the voltage increases, the surface activity of the positive electrode active material is higher, and the side reaction with the electrolytic solution is more intense, accelerating the capacity loss, and causing a serious deterioration in the cycling capacity retention rate.

In view of the above problems, the inventors consider to improve the composition of the electrolytic solution under the high-voltage system, and find the correlation between the electrolytic solution and the positive electrode active material, so as to improve the cycling capacity retention rate of the secondary battery, and the dynamic performance of Li⁺ migration on the positive electrode surface. The specific scheme of the secondary battery is described next.

### Secondary battery

A first aspect of the present application provides a secondary battery. A secondary battery, also known as a rechargeable battery or accumulator, is a battery that can continue to be used by activating its active material by means of charging after the battery has been discharged.

The secondary battery comprising a positive electrode plate and an electrolytic solution; the positive electrode plate comprises a positive electrode active material; the electrolytic solution comprises a boron-containing salt, the boron-containing salt comprises one or more of the compound shown in Formula 1, the compound shown in Formula 2 and the compound shown in Formula 3, 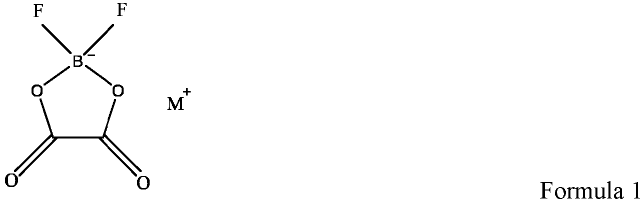 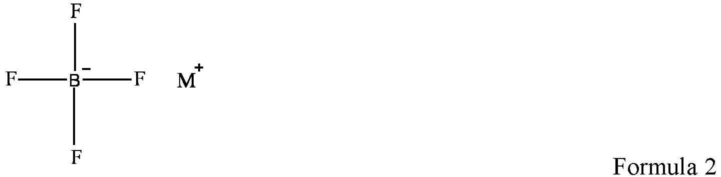 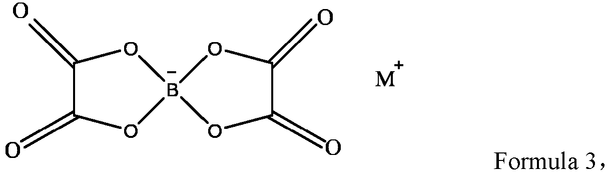 in Formulas 1 to 3, M is each independently selected from Li, Na, or K; a mass percentage of the boron-containing salt based on the total mass of the electrolytic solution is denoted as A%; the upper-limit potential of the positive electrode active material with respect to the lithium metal is denoted as V₁ (V); and the secondary battery satisfies: 0 < A/(V₁-4.1) ≤ 4 and V₁ > 4.1; optionally, 0 < A/(V₁-4.1) ≤ 3.

Although the mechanism is less clear, when the secondary battery described in the present application is capable of improving the cycling life, safety performance and capacity of the secondary battery in a balanced manner; the inventors hypothesize that the reaction principle of the present application is as follows:

The boron-containing salt, as a salt with a B atom as the central atom, can be coordinated with alkoxy, o-diphenol, o-hydroxy, carboxylic acid, etc. to form anionic complexes, and the anionic complexes are mainly of large π-conjugated structure, with a more dispersed distribution of negative charge of the central ion, whose charge is out-of-domain, and at the same time the anionic radius is large, which makes it difficult for anion to form ion pairs with metal ions such as lithium ions, sodium ions or potassium ions in organic solvents with strong binding force, and its solubility is relatively good. The more electron-absorbing groups there are in the anion complex, the more stable the anion structure is, the higher the solubility of metal ions in the electrolytic solution is, and it is more conducive to improving the conductivity of the electrolytic solution. Moreover, the boron-containing salt can form a positive solid electrolyte interface film (Catheode Electrolyte Interphase (CEI) film) with excellent performance on the surface of the positive electrode active material, and the CEI membrane is insoluble in organic solvents, and can exist stably in the organic electrolytic solution, which can effectively reduce the solvent molecules in the electrolytic solution to be embedded into the positive electrolyte active material, thus ensuring the structural stability of the positive electrode active material and improving the cycling life of the secondary battery. Moreover, the boron-containing salt forms a solid electrolyte interface (SEI) film with excellent performance on the surface of the negative electrode active material, which can play a good protective role for the negative electrode active material, thereby ensuring the structural stability of the negative electrode active material and further improving the cycling performance of the secondary battery.

By way of example, using M as the lithium element, the boron-containing lithium salt may include one or more of lithium tetrafluoroborate (LiBF₄), lithium bisoxalate borate (LiB(C₂O₄)₂, abbreviated as LiBOB), and lithium difluorooxalate borate (LiBC₂O₄F₂, abbreviated as LiDFOB). Further, the boron-containing lithium salt comprises a combination of lithium tetrafluoroborate LiBF₄, lithium bisoxalate borate (LiB(C₂O₄)₂, or LiBOB), and lithium difluorooxalate borate (LiBC₂O₄F₂, or LiDFOB).

Any one of the compound shown in Formula 1 and the compound shown in Formula 3 has a passivating effect on the positive electrode current collector in the positive electrode plate, and can reduce the risk of corroding the positive electrode current collector by side reaction with the positive electrode current collector, and improve the structural stability of the positive electrode plate. In addition, the electrolytic solution comprising any one of the compound shown in Formula 1 and the compound shown in Formula 3 is less likely to produce acidic substances, and can further serve to reduce the risk of the positive electrode current collector being corroded, so as to play a good protective role for the whole of the positive electrode plate, to ensure the cycling stability of the secondary battery, and thus to improve the cycling life of the secondary battery. Any of The compounds shown in Formula 1 and the compounds shown in Formula 3 has better compatibility with the positive electrode active material, which is favorable to the migration of lithium ions, and thus can ensure the capacity of the secondary battery.

When the compound shown in Formula 2 is used in conjunction with an organic solvent such as a carbonate solvent or additive in the electrolytic solution, the viscosity of the system formed by the compound shown in Formula 2 is relatively low, which is favorable to the release of the metal ions, and thus enables the conductivity in the electrolytic solution to be improved. The CEI film formed by the compound shown in formula 2 has a more uniform thickness, the dynamic activity is better, the charge transfer impedance in the secondary battery is smaller, which can significantly improve the low-temperature performance of the secondary battery and the growth rate of cycling DCR, thus improving the dynamic performance of lithium-ion migration of the secondary battery on the cathode surface; CEI film is not easy to thermal decomposition, its performance at high temperatures is more stable, and it can significantly improve the high-temperature performance of the secondary battery.

In some embodiments, the compounds shown in Formula 1 to Formula 3 are used in combination, and the CEI film formed by the three of them has more constituents, and the structure of the CEI film is more stable; and on the basis of ensuring the stability of the structure, it can ensure that the CEI film can provide good protection for the positive electrode active material.

In an embodiment of the present application, the secondary battery satisfies the range as described above, and under a high-voltage system, the boron-containing salt can form a dense and stable CEI film on the surface of the positive electrode active material, which can play a good protective effect on the positive electrode active material, can reduce the risk of the positive electrode active material contacting with the electrolytic solution and having a side reaction, and thus can make the transition metal in the positive electrode active material less prone to a Redox reaction; and cation mixing is not easy to occur in the positive electrode active material, which is conducive to the de-embedding of metal ions, thus ensuring the capacity exertion and the structural stability of the positive electrode active material, and enhancing the cyclic capacity retention rate of the secondary battery. It is not easy for the positive electrode active material and electrolytic solution to have side reactions and produce by-products such as oxygen, etc., so that the secondary battery can ensure that the voltage in the secondary battery is in a normal state in the process of charging and discharging cycle, which ensures the safety performance of the secondary battery.

When the secondary battery of the present application is a lithium-ion battery, the boron-containing salt may be selected as a boron-containing lithium salt, for example, the boron-containing lithium salt may comprise one or more of lithium tetrafluoroborate LiBF₄, lithium bisoxalate borate (LiB(C₂O₄)₂, abbreviated as LiBOB), and lithium difluorooxalate borate (LiBC₂O₄F₂, abbreviated as LiDFOB). Furthermore, the boron-containing lithium salt includes a combination of lithium tetrafluoroborate LiBF₄, lithium bisoxalate borate LiBOB, and lithium difluorooxalate borate LiDFOB. Of course, when the secondary battery is a lithium-ion battery, the boron-containing salt may be selected as a boron-containing sodium salt, a boron-containing potassium salt, and the like. When the secondary battery is a sodium-ion battery, the boron-containing salt can be selected as a sodium salt or the like, and of course, the boron-containing lithium salt, the boron-containing potassium salt or the like can also be selected. Optionally, 0 < A/(V1-4.1) ≤ 3; exemplarily, 0 < A/(V1-4.1) ≤ 0.1, 0 < A/(V1-4.1) ≤ 0.2, 0 < A/(V1-4.1) ≤ 0.5, 0 < A/(V₁-4.1) ≤ 1, 0 < A/(V1-4.1) ≤ 1.5, 0 < A/(V1-4.1) ≤ 2, 0 < A/(V1-4.1) ≤ 2, 0 < A/(V1- 4.1) ≤ 2.5, 0 < A/(V1-4.1) ≤ 3, 0 < A/(V₁-4.1) ≤ 3.5, or 0 < A/(V₁-4.1) ≤ 4.

In some embodiments, V1 > 4.1.

The positive electrode active material has a relatively high upper-limit potential V₁ with respect to the lithium metal, which is suitable for charging and discharging under the high-voltage system; and with the above-mentioned use of the positive electrode active material and the boron-containing salt, the boron-containing salt can sufficiently protect the surface of the positive electrode active material, so as to ensure the structural stability of the positive electrode active material under the high-voltage system. Optionally, 4.1 ≤ V1 ≤ 4.6; exemplarily, the upper-limit potential V₁ (V) of the positive electrode active material with respect to the lithium metal may be 4.1 V, 4.2 V, 4.3 V, 4.4 V, 4.5 V, or 4.6 V; or within a range consisting of any two of the above values.

The upper-limit potential V₁ of the positive electrode active material with respect to the lithium metal can be considered to be the difference between the potentials of the positive electrode active material and the lithium metal. The upper-limit potential V₁ of the positive electrode active material can be determined using a test method and a test apparatus known in the art, and the specific test process is as follows: the powder of the positive electrode active material is mixed and stirred with SP and PVDF at a ratio of 90:5:5, and the resulting mixture is uniformly applied on an Al foil with the thickness of 13 micrometers, and then compacted to obtain the positive electrode film, with a compaction density of 3.3-3.6g/cm³, the humidity of this process is controlled at <10%, and then the positive electrode film is dried in an oven at 100°C for 2h, and the positive electrode film is vacuum dried at 105°C/4h/0.09Mpa before assembling into a button cell. Then the prepared positive electrode film is assembled into an electrode film-lithium sheet CR2430 semi-button battery in a PRS340/11-119-11 Braun glove box, in which 1M LiPF6 EC/EMC/DEC = 3/5/2 is used as the electrolytic solution. The assembled semi-button battery is standing for 3h, and the test is carried out at 25°C, 0.5C is first used in the voltage range of 2.8-V1 for Charge deintercalation of Li, and then 0.1C is used in the voltage range of V1-2.8 for Discharge intercalation of Li, to obtain the charging-discharging capacity for button battery. The charging and discharging specific capacity is obtained by dividing the charging and discharging capacity for button battery by the mass of the positive electrode active material, and the upper-limit potential V₁ of the positive electrode active material with respect to the lithium metal is the upper-limit potential when the discharging specific capacity is 150-220 mAh/g.

In some embodiments, 0 < A ≤ 2.

When the boron-containing salt is in the above range, it is able to form a dense and stable CEI film on the surface of the positive electrode active material, thereby being able to adequately protect the positive electrode active material, improve the structural stability of the positive electrode active material, and thereby ensuring the cycling stability of the secondary battery. The boron-containing salt can further take into account the formation of a SEI film on the surface of the negative electrode active material, improving the protective effect on the negative electrode active material. Optionally, 0 < A ≤ 1.5; exemplarily, the mass percentage content A% of the boron-containing salt may be 0.1%, 0.2%, 0.3%, 0.5%, 0.6%, 0.8%, 0.9%, 1%, 1.2%, 1.5%, 1.8%, or 2%; or a range consisting of any two of the above values.

In some embodiments, the secondary battery further comprises a negative electrode plate, the negative electrode plate comprising a negative electrode active material, the negative electrode active material having an upper-limit potential with respect to the lithium metal denoted as V₂ (V); and the secondary battery further satisfies 0 < A x V₂ ≤ 1.2.

The boron-containing salt has a relatively high reduction potential, and is also able to participate in anode film formation, forming a dense and stable SEI film, and the SEI film is able to form a sufficient protection on the surface of the negative electrode active material, reducing the risk of side reactions occurring in the contact between the negative electrode active material and the electrolytic solution, and thus mitigating the risk of the reduction of organic solvents in the electrolytic solution, and further improving the cycling stability of the secondary battery.

When the depth of lithium embedded in the negative electrode active material is deepened, the activity of the negative electrode active material is stronger, and the electrolytic solution is more likely to be reduced on the surface of the negative electrode active material; in view of this, when the secondary battery of the present application satisfies the above relationship, the mass percentage of boron-containing salt increases with the upper-limit potential of the negative electrode active material, so as to be able to form a denser and more stable SEI film on the surface of the more active negative electrode active material, and to strengthen the protection of the negative electrode active material, improving the cycling stability of the secondary battery, and thus improving the cycling life of the secondary battery.

In some embodiments, 0.02 ≤ V₂ ≤ 2.5; optionally, 0.1 ≤ V₂ ≤ 2.

The above-described negative electrode active material is suitable for charging and discharging under the high-voltage system; and with the cooperative use of the above-described negative electrode active material and the boron-containing salt, the boron-containing salt can sufficiently protect the surface of the positive electrode active material, so as to ensure the structural stability of the positive electrode active material under the high-voltage system.

The upper-limit potential V₂ of the negative electrode active material with respect to the lithium metal can be considered to be the difference between the potentials of the negative electrode active material and the lithium metal. The upper-limit potential V₂ of the negative electrode active material can be determined using a test method and a test apparatus known in the art, and the specific test process is as follows: the powder of the negative electrode active material is mixed and stirred with SP and PVDF at a ratio of 91.6:1.8:6.6, and the resulting mixture is uniformly applied on an Cu foil with the thickness of 8 micrometers, and then compacted to obtain the negative electrode film, with a compaction density of 1.4-1.6g/cm³, the humidity of this process is controlled at <10%, and then the negative electrode film is dried in an oven at 100°C for 2h, and the negative electrode film is vacuum dried at 105°C/4h/-0.09Mpa before assembling into a button cell. Then the prepared negative electrode film is assembled into a negative electrode film -lithium sheet CR2430 semi-button battery in a PRS340/11-119-11 Braun glove box, in which 1M LiPF6 EC/EMC/DEC = 3/5/2 is used as the electrolytic solution. The assembled semi-button battery is standing for 5h, and the test is carried out at 25°C, using 0.05C to 0.005V, 50uA DC to 0.005V, standing for 5min,10uA DC to 0.005V, standing for 5min, 0.1C CC to V2, standing for 5min, to perform a Charge/Discharge intercalation/deintercalation of Li to obtain the charging-discharging capacity for button battery. The charging and discharging specific capacity is obtained by dividing the charging and discharging capacity for button battery by the mass of the negative electrode active material, and the upper-limit potential V₂ of the negative electrode active material with respect to the lithium metal is the upper-limit potential when the discharging specific capacity is 330-380 mAh/g.

In some embodiments, M may be selected from Li or Na, capable of providing lithium or sodium ions in a secondary battery system.

Exemplarily, the compounds shown in Formula 1 comprise lithium difluorooxalate borate and/or sodium difluorooxalate borate.

Exemplarily, the compounds shown in Formula 2 include lithium tetrafluoroborate and/or sodium tetrafluoroborate.

Exemplarily, the compounds shown in Formula 3 include lithium bisoxalate borate and/or sodium bisoxalate borate.

By way of example, the boron-containing lithium salt comprises one or more of lithium difluorooxalate borate LiDFOB, lithium tetrafluoroborate LiBF₄, and lithium bisoxalate borate LiBOB. When the lithium tetrafluoroborate LiBF₄, lithium bisoxalate borate LiBOB, and lithium difluoroborate borate LiDFOB are used in combination, the three compounds are able to form a CEI film on the surface of the positive electrode active material, and the CEI film effectively reduces the decomposition of the positive electrode active material caused by the electrolytic solution; the three compounds are also able to form a SEI film on the surface of the negative electrode active material, and the SEI film is able to improve the lithium ion transport and reduce the continuous reduction of electrolytic solution's decomposition, which can improve the cycling stability of the secondary battery.

In some embodiments, the electrolytic solution may further comprise lithium hexafluorophosphate LiPF₆, lithium perchlorate LiClO₄, lithium hexafluoroarsenate LiAsF₆, lithium bisfluorosulfonimide LiFSI, lithium bis(trifluoromethylsulfonyl)imide LiTFSI, lithium trifluoromethane sulfonate LiTFS, lithium difluorophosphate LiPO₂F₂, lithium difluorodioxalate phosphate LiDFOP, lithium tetrafluorooxalate phosphate LiTFOP, sodium hexafluorophosphate NaPF₆, sodium bifluorosulfonimide NaFSI, sodium difluorophosphate NaPO₂F₂, sodium bis(trifluoromethylsulfonyl)imide NaTFSI, and sodium fluorosulfonate NaFSO₃. The above lithium salts and boron-containing salts, when used in combination, can improve the conductivity of the electrolytic solution

By way of example, the electrolytic solution may comprise lithium hexafluorophosphate LiPF₆, lithium tetrafluoroborate LiBF₄, lithium perchlorate LiClO₄, lithium hexafluoroarsenate LiAsF₆, lithium bisfluorosulfonimide LiFSI, lithium bis(trifluoromethylsulfonyl)imide LiTFSI, lithium trifluoromethane sulfonate LiTFS, lithium difluorooxalate borate LiDFOB, lithium bisoxalate borate LiBOB, sodium hexafluorophosphate NaPF₆, sodium bisfluorosulfonimide NaFSI, sodium difluorophosphate NaPO₂F₂, sodium bis(trifluoromethanesulfonyl)imide NaTFSI, and sodium fluorosulfonate NaFSO₃.

In some embodiments, the electrolytic solution can further include a Lewis base solvent. Lewis base promotes the dissociation of boron-containing salts and facilitates the release of lithium ions, which can increase the conductivity of the electrolytic solution. By way of example, the Lewis base solvent includes a compound containing one or more of a halogen atom, an alkoxy group, an olefin, and an aromatic hydrocarbon group, and exemplarily, the Lewis base may include trimethyl phosphate and the like.

In some embodiments, the organic solvent may further include one or more of ethylene carbonate EC, propylene carbonate PC, methyl ethyl carbonate EMC, diethyl ethyl carbonate DEC, dimethyl methyl carbonate DMC, dipropyl carbonate DPC, methyl propyl carbonate MPC, ethyl propyl carbonate EPC, butylene carbonate BC, methyl formate MF, methyl acetate MA, ethyl acetate EA, propyl acetate PA, methyl propionate MP, ethyl propionate EP, propyl propionate PP, methyl butyrate MB, ethyl butyrate EB, 1,4-butyrolactone GBL, sulfolane SF, dimethyl sulfone MSM, methyl ethyl sulfone EMS and diethyl sulfone ESE.

In some embodiments, the electrolytic solution further comprises a film-forming additive, such as a negative electrode film-forming additive; the negative electrode film-forming additive comprising one or more of a carbonate additive, a sulfate additive, a sulfite additive, a phosphate additive, and a polynitrile additive. The negative electrode film-forming additive is capable of forming an SEI film on the surface of the negative electrode active material, and the multiple components together forming a film on the surface of the SEI film can enrich the film structure of the SEI film and improve the structural stability of the SEI film. Further, the negative electrode film-forming additive comprises at least two of a carbonate additive, a sulfate additive, a sulfite additive, a phosphate additive, and a polynitrile additive; the composition of the SEI film formed therein is richer, and its structural stability is higher. Optionally, based on the total mass of the electrolytic solution, the mass percentage d of the film-forming additive satisfies: 0.5% ≤ d ≤ 10%; optionally, 1% ≤ d≤6%.

As an example, the carbonate additive comprises a cyclic carbonate additive and/or a linear carbonate additive. Further, the cyclic carbonate additive comprises one or more of vinylidene carbonate VC, fluoroethylene carbonate FEC, difluoroethylene carbonate DFEC, vinyl ethylene carbonate VEC, and dicaprylyl carbonate CC; and/or the linear carbonate additives comprises one or more of allyl ethyl carbonate AEC, diphenyl carbonate DPC, methyl allyl carbonate MAC, and Polycarbonate PC.

As an example, the sulfate additive comprises a cyclic sulfonate additive and/or a hydrocarbyl sulfate additive. Further, the cyclic sulfonate additive comprises one or more of 1,3-propane sultone PS, propene sultone PES, and 3-fluoro-1,3-propane sultone FPS. The hydrocarbyl sulfate additive comprises one or more of ethylene sulfate DTD, diethyl sulfate DES, and dimethyl sulfate DMS.

As an example, the sulfite additive comprise ethylene sulfite ES and/or vinyl ethylene sulfite VES.

As an example,, the phosphate additive comprises one or more of tris(trimethylsilane) phosphate, triallyl phosphate, trimethyl phosphate, and triethyl phosphate.

As an example, the polynitrile additive comprises one or more of toluene diisocyanate, hexamethylene diisocyanate, adiponitrile, toluene diisocyanate, hexamethylene diisocyanate.

The electrolytic solution of the present application can be prepared according to methods conventional in the art. For example, additives, solvents, electrolyte salts and the like can be mixed well to obtain the electrolytic solution. There is no particular limitation on the order of addition of each material. For example, the additives, the electrolyte salts, and the like can be added to the non-aqueous solvent and mixed well to obtain a non-aqueous electrolytic solution.

In the present application, components and their contents in the electrolytic solution can be determined according to methods known in the art. For example, they can be determined by gas chromatography-mass spectrometry (GC-MS), ion chromatography (IC), liquid chromatography (LC), nuclear magnetic resonance spectroscopy (NMR), and the like.

It is to be noted that, when the electrolytic solution of the present application is tested, a fresh electrolytic solution may be directly taken, or the electrolytic solution may be obtained from the secondary battery. An exemplary method for obtaining the electrolytic solution from the secondary battery includes the following steps: the secondary battery is discharged to a discharge cut-off voltage (for safety reasons, the battery is generally in a fully discharged state) and centrifuged, and then an appropriate amount of centrifuged liquid, namely, a non-aqueous electrolytic solution, is taken. The non-aqueous electrolytic solution may alternatively be directly obtained from an injection port of the secondary battery.

### [Positive electrode plate]

In some embodiments, the positive electrode plate includes a positive electrode current collector and a positive electrode film disposed on at least one surface of the positive electrode current collector. For example, the positive electrode current collector has two opposite surfaces in its thickness direction, and the positive electrode film is disposed on either or both of the two opposite surfaces of the positive electrode current collector.

The positive electrode film includes a positive electrode active material, which may be a positive electrode active material commonly known in the art for secondary batteries. For example, the positive electrode active material may include at least one of a lithium transition metal oxide, a lithium-containing phosphate with an olivine structure, and respective modified compounds thereof. Examples of the lithium transition metal oxide may include at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate with an olivine structure may include at least one of a lithium iron phosphate, a composite material of a lithium iron phosphate and carbon, a lithium manganese phosphate, a composite material of a lithium manganese phosphate and carbon, a lithium manganese iron phosphate, a composite material of a lithium manganese iron phosphate and carbon, and respective modified compounds thereof. The present application is not limited to these materials, and may also use other conventionally known materials that can be used as positive electrode active materials of secondary batteries. These positive electrode active materials may be used alone, or may be combined with two or more.

In some embodiments, the positive electrode active material includes LiNiₓCo_{y}Mn_{z}M_{1-x-y-z}O₂ or LiNiₐCo_{b}Al_{c}N_{1-a-b-c}O₂, where M and N are any one independently selected from Co, Ni, Mn, Mg, Cu, Zn, Al, Sn, B, Ga, Cr, Sr, V and Ti, 0 ≤ y ≤ 1, 0 ≤ x < 1, 0 ≤ z ≤ 1, x+y+z ≤ 1, 0 ≤ a ≤ 1, 0 ≤ b ≤ 1, 0 ≤ c ≤ 1, and a+b+c ≤ 1. The positive electrode active material is used with the boron-containing lithium salt, and B atoms in the boron-containing lithium salt easily combine with O atoms in the positive electrode active material, thereby reducing charge transfer resistance of the positive electrode active material and reducing diffusion resistance of lithium ions within a bulk phase of the positive electrode active material. Therefore, when the non-aqueous electrolytic solution contains appropriate amounts of lithium tetrafluoroborate and lithium difluorooxalate borate, the low-cobalt or cobalt-free positive electrode active material can have a significantly improved lithium ion diffusion rate, and lithium ions in the bulk phase of the low-cobalt or cobalt-free positive electrode active material can be replenished to the surface in a timely manner so that excessive lithium de-intercalation from the surface of the low-cobalt or cobalt-free positive electrode active material may be avoided, thereby stabilizing crystal structure of the low-cobalt or cobalt-free positive electrode active material. The more stable crystal structure of the low-cobalt or cobalt-free positive electrode active material can greatly reduce probability of instability in structural, chemical, or electrochemical properties of the positive electrode active material due to the excessive lithium de-intercalation from the surface of the low-cobalt or cobalt-free positive electrode active material, such as irreversible distortion and increased lattice defects of the positive electrode active material.

LiNiₓCo_{y}Mn_{z}M_{1-x-y-z}O₂ or LiNiₐCo_{b}Al_{c}N_{1-a-b-c}O₂ may be prepared according to a conventional method in the art. An exemplary preparation method is as follows: a lithium source, a nickel source, a cobalt source, a manganese source, an aluminum source, a precursor of an M element, and a precursor of an N element are mixed and sintered. The sintering atmosphere may be an oxygen-containing atmosphere, such as air atmosphere or oxygen atmosphere. The sintering atmosphere has an O₂ concentration of, for example, 70% to 100%. The sintering temperature and time may be adjusted according to an actual situation.

As an example, the lithium source includes, but is not limited to, at least one of lithium oxide (Li₂O), lithium phosphate (Li₃PO₄), lithium dihydrogen phosphate (LiH₂PO₄), lithium acetate (CH₃COOLi), lithium hydroxide (LiOH), lithium carbonate (Li₂CO₃), and lithium nitrate (LiNO₃). As an example, the nickel source includes, but is not limited to, at least one of nickel sulfate, nickel nitrate, nickel chloride, nickel oxalate, and nickel acetate. As an example, the cobalt source includes, but is not limited to, at least one of cobalt sulfate, cobalt nitrate, cobalt chloride, cobalt oxalate, and cobalt acetate. As an example, the manganese source includes, but is not limited to, at least one of manganese sulfate, manganese nitrate, manganese chloride, manganese oxalate, and manganese acetate. As an example, the aluminum source includes, but is not limited to, at least one of aluminum sulfate, aluminum nitrate, aluminum chloride, aluminum oxalate, and aluminum acetate. As an example, the precursor of the M element includes, but is not limited to, at least one of oxides, nitrate compounds, carbonate compounds, hydroxide compounds, and acetate compounds of the M element. As an example, the precursor of the N element includes, but is not limited to, at least one of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium bisulfide, hydrogen sulfide, lithium sulfide, ammonium sulfide, and elemental sulfur.

In some embodiments, based on a total mass of the positive electrode film, a layered material with molecular formula LiNiₓCo_{y}Mn_{z}M_{1-x-y-z}O₂ or LiNiₐCo_{b}Al_{c}N_{1-a-b-c}O₂ has a mass percentage of 80% to 99%. For example, the mass percentage of the layered material with molecular formula LiNiₓCo_{y}Mn_{z}M_{1-x-y-z}O₂ or LiNiₐCo_{b}Al_{c}N_{1-a-b-c}O₂ may be 80%, 81%, 82%, 83%, 84%, 85%, 86%, 87%, 88%, 89%, 90%, 91%, 92%, 93%, 94%, 95%, 96%, 97%, 98%, 99%, or a range of any of the above values. Optionally, the mass percentage of the layered material with molecular formula LiNiₓCo_{y}Mn_{z}M_{1-x-y-z}O₂ or LiNiₐCo_{b}Al_{c}N_{1-a-b-c}O₂ is 85% to 99%, 90% to 99%, 95% to 99%, 80% to 98%, 85% to 98%, 90% to 98%, 95% to 98%, 80% to 97%, 85% to 97%, 90% to 97%, or 95% to 97%.

In some embodiments, the positive electrode active material comprises a compound with the molecular formula LiNiₓCo_{y}M_{1-x-y}, wherein M represents one or more of Mn, Fe, Mg, Al, Cu, and Ti, x ≥ 0.5, 0 ≤ y ≤ 0.2, and x + y ≤ 1. The lithium-deficient state of the surface of the above-described positive electrode active material under a high voltage is likely to lead to a phase transition, Li/Ni mixing, oxygen release, etc., on the surface of the positive electrode active material. The boron-containing salt can passivate the surface of the positive electrode active material and can combine with metal cations such as Al³⁺ and Ni²⁺, which can improve the mixing of Li/Ni and passivate the aluminum foil.

In some embodiments, the positive electrode film may optionally further include a positive electrode conductive agent. There is no particular limitation to the type of the positive electrode conductive agent in the present application. As an example, the positive electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the positive electrode film, the positive electrode conductive agent is present in a mass percentage of 5% or less.

In some embodiments, the positive electrode film may further optionally include a positive electrode binder. There is no particular limitation on the type of the positive electrode binder in the present application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode film, the positive electrode binder is present in a mass percentage of 5% or less.

In some embodiments, the positive electrode current collector may be a metal foil or a composite current collector. As an example of the metal foil, an aluminum foil or an aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The positive electrode film is usually formed by coating the positive electrode current collector with a positive electrode slurry, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

### [Negative electrode plate]

The negative electrode plate includes a negative electrode current collector and a negative electrode film disposed on at least one surface of the negative electrode current collector, and the negative electrode film includes a negative electrode active material.

As an example, the negative electrode current collector has two surfaces opposite in its thickness direction, and the negative electrode film is disposed on either or both of the two opposite surfaces of the negative electrode current collector.

In some embodiments, the negative electrode active material may be a negative electrode active material commonly known in the art for batteries. As an example, the negative electrode active material may include at least one of artificial graphite, natural graphite, soft carbon, hard carbon, a silicon-based material, a tin-based material, lithium titanate, lithium-aluminum alloy, and the like. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that may be used as negative electrode active materials of batteries may alternatively be used. One type of these negative electrode active materials may be used alone, or two or more types may be used in combination.

In some embodiments, the negative electrode film may further optionally include a negative electrode binder. There is no particular limitation on the type of the negative electrode binder in the present application. As an example, the negative electrode binder may include one or more of styrene butadiene rubber (SBR), water-soluble unsaturated resin SR-1B, water-based acrylic resin such as polyacrylic acid PAA, polymethacrylic acid PMAA, and polyacrylic acid sodium PAAS, polyacrylamide (PAM), polyvinyl alcohol (PVA), sodium alginate (SA), and carboxymethyl chitosan (CMCS). In some embodiments, based on a total mass of the negative electrode film, the negative electrode binder is present in a mass percentage of 5% or less.

In some embodiments, the negative electrode film may further optionally include a negative electrode conductive agent. There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the negative electrode film, the negative electrode conductive agent is present in a mass percentage of 5% or less.

In some embodiments, the negative electrode film may further optionally include other auxiliaries. As an example, the other auxiliaries may include a thickener, such as carboxymethyl cellulose sodium (CMC-Na) or a PTC thermistor material. In some embodiments, based on the total mass of the negative electrode film, the other auxiliaries are present in a total mass percentage of 2% or less.

In some embodiments, the negative electrode current collector may be a metal foil or a composite current collector. As an example of the metal foil, a copper foil or a copper alloy foil may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The negative electrode film is usually formed by applying a negative electrode current collector with a negative electrode slurry, drying, and cold-pressing. The negative electrode slurry is usually formed by dispersing the negative electrode active material, the optional conductive agent, the optional binder, and the other optional auxiliaries in a solvent and stirring uniformly. The solvent may be N-methylpyrrolidone (NMP) or deionized water, but is not limited thereto.

The negative electrode plate does not exclude other additional functional layers than the negative electrode film. For example, in some embodiments, the negative electrode plate further includes a protective layer covering the surface of the negative electrode film.

### [Separator]

In some embodiments, the secondary battery further includes a separator. There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolytic solution.

In some embodiments, the outer package of the secondary battery may be a hard housing, such as a hard plastic housing, an aluminum housing, or a steel housing. The outer package of the secondary battery may alternatively be a soft bag, such as a pocket type soft bag. The soft bag may be made of plastic, which may be polypropylene, polybutylene terephthalate, poly(butylene succinate), and the like.

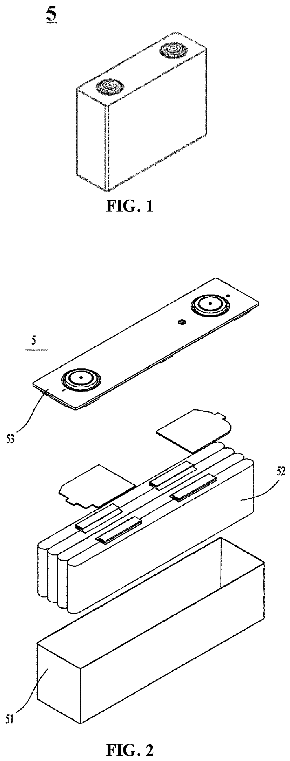

The present application does not have particular limitation to the shape of the secondary battery. The secondary battery may be cylindrical, square, or in other arbitrary shape. FIG. 1 shows a secondary battery 5 with a square structure as an example.

In some embodiments, as shown in FIG. 1 and FIG. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary battery according to the present application may be assembled into a battery module. The battery module may include a plurality of secondary batteries, and the specific quantity may be adjusted according to the application and capacity of the battery module.

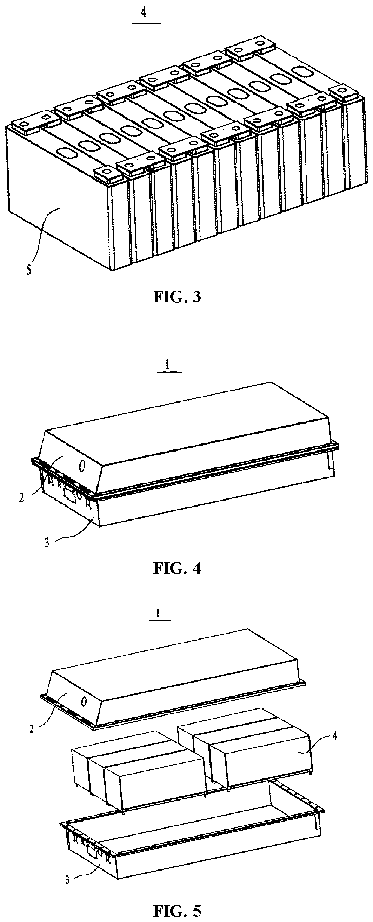

FIG. 3 is a schematic diagram of a battery module 4 as an example. As shown in FIG. 3, in the battery module 4, a plurality of secondary batteries 5 may be arranged in sequence along a length of the battery module 4. Of course, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and the quantity of the battery module included in the battery pack may be adjusted according to the application and capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 disposed in the battery box. The battery box includes an upper box body 2 and a lower box body 3. The upper box body 2 is used to close the lower box body 3 to form a closed space for accommodating the battery modules 4. A plurality of battery modules 4 may be arranged in the battery box in any manner.

### Electrical device

In a second aspect, the present application provides an electrical device, which includes at least one of the secondary battery, the battery module, and the battery pack of the present application. The secondary battery, the battery module, and the battery pack may be used as a power source of the electrical device or as an energy storage unit of the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

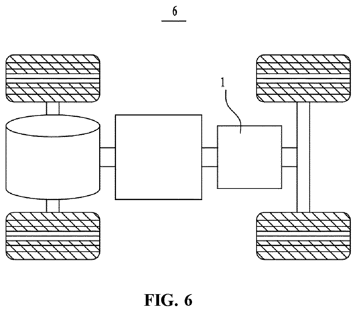

Fig. 6 is a schematic diagram of an electrical device as an example. The electrical device 6 is a pure electric vehicle, a hybrid electric vehicle, a plug-in hybrid electric vehicle, or the like. In order to meet requirements of the electrical device for high power and high energy density, the battery pack 1 or the battery module may be used.

As another example, the electrical device may be a mobile phone, a tablet computer, a notebook computer, or the like. The electrical device is generally required to be thin and light, so the secondary battery may be used as a power source.

### Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

### Example 1

### 1. Preparation of a positive electrode plate

An aluminum foil with a thickness of 13 µm was used as a positive electrode current collector.

A positive electrode active material LiNi_{0.65}Co_{0.07}Mn_{0.28}O₂, a conductive agent carbon black, and polyvinylidene fluoride (PVDF) as a binder were fully mixed at a weight ratio of 97.5:1.4:1.1 in an appropriate amount of solvent NMP to form a uniform positive electrode slurry; and the positive electrode slurry was uniformly applied to a surface of the positive electrode current collector aluminum foil followed by drying and cold pressing to obtain a positive electrode plate.

### 2. Preparation of a negative electrode plate

A copper foil with a thickness of 8 µm was used as a negative electrode current collector.

A negative electrode active material graphite, styrene butadiene rubber (SBR) as a binder, carboxymethyl cellulose sodium (CMC-Na) as a thickener, and a conductive agent carbon black (Super P) were fully mixed at a weight ratio of 96.2:1.8: 1.2:0.8 in an appropriate amount of solvent deionized water to form a uniform negative electrode slurry; and the negative electrode slurry was uniformly applied to a surface of the negative electrode current collector copper foil followed by drying and cold pressing to obtain a negative electrode plate

### 3. Separator

A porous polyethylene (PE) film was used as the separator.

### 4. Preparation of an electrolytic solution

In an environment with a water content less than 10 ppm, non-aqueous organic solvents including ethylene carbonate, methyl ethyl carbonate and diethyl carbonate were mixed at a volume ratio of 1:1:1 to obtain an electrolyte solvent. Subsequently, the additives and the like were dissolved in the mixed solvent to prepare the electrolytic solution with a lithium salt concentration of 1 mol/L. See the table below for the specific substances contained in the electrolytic solution.

### 5. Preparation of a secondary battery

The positive electrode plate, the separator, and the negative electrode plate were stacked in sequence to ensure that the separator was located between the positive electrode plate and the negative electrode plate for separation, and then wound to obtain an electrode assembly; and the electrode assembly was placed in an outer package housing and dried, then the electrolytic solution was injected, followed by vacuum packaging, standing, formation, shaping, and other processes, thereby obtaining a lithium-ion battery.

### Example 2

### Examples 2-1 to 2-5

The secondary batteries in Examples 2-1 to 2-5 were prepared by a similar method to Example 1, with the difference from Example 1 that the mass percentages A of the boron-containing salt was adjusted. For details please see Table 1.

### Comparative Example

### Comparative Examples 1 and 2

The secondary battery in Comparative Examples 1 and 2 was manufactured by a similar method to Example 1, with the difference from Example 1 that that the mass percentages A of the boron-containing salt was adjusted. For details please see Table 1.

### Example 3

### Examples 3-1 to 3-3

The secondary batteries in Examples 3-1 to 3-3 were manufactured by a similar method to Example 1, with the difference from Example 1 that the upper-limit potential V₁ of the "positive electrode active material" was adjusted. For details please see Table 1.

### Example 4

### Examples 4-1 to 4-5

The secondary batteries in Examples 4-1 to 4-5 were manufactured by a similar method to Example 1, with the difference from Example 1 that the upper-limit potential V₂ of the "negative electrode active material" was adjusted. For details please see Table 1.

### Example 5

### Example 5-1

The secondary battery in Example 5-1 was manufactured by a similar method to Example 1, with the difference from Example 1 that the type of "positive electrode active material" was adjusted. For details please see Table 1.

### Example 5-2

The secondary battery in Example 5-2 was manufactured by a similar method to Example 1, with the difference from Example 1 that the type of "negative electrode active material" was adjusted. For details please see Table 1.

**Table 1**

| | Positive electrode active material | | Negative electrode active material | | Boron-containing salt for electrolytic solution | | A/ (V₁-4.1) | A*V₂ |
|---|---|---|---|---|---|---|---|---|
| | Formula | Upper-limit potential V₁ | Type | Upper-limit potential V₂ | Type | Mass% A% | | |
| Example 1 | LiNi_{0.65}Co_{0.07}NM_{0.28} | 4.4 | Artificial graphite | 1 | LiDFOB | 0.6 | 2 | 0.25 |
| Example 2-1 | LiNi_{0.65}Co_{0.07}NM_{0.28} | 4.4 | Artificial graphite | 1 | LiDFOB | 0.03 | 0.1 | 0.03 |
| Example 2-2 | LiNi_{0.65}Co_{0.07}NM_{0.28} | 4.4 | Artificial graphite | 1 | LiDFOB | 0.24 | 0.8 | 0.24 |
| Example 2-3 | LiNi_{0.65}Co_{0.07}NM_{0.28} | 4.4 | Artificial graphite | 1 | LiDFOB+Li BF₄ | 0.45 | 1.5 | 0.45 |
| Example 2-4 | LiNi_{0.65}Co_{0.07}NM_{0.28} | 4.4 | Artificial graphite | 1 | LiBF₄ | 0.9 | 3 | 0.9 |
| Example 2-5 | LiNi_{0.65}Co_{0.07}NM_{0.28} | 4.4 | Artificial graphite | 1 | LiDFOB | 1.2 | 4 | 1.2 |
| Comparative Example 1 | LiNi_{0.65}Co_{0.07}NM_{0.28} | 4.4 | Artificial graphite | 1 | LiDFOB | 0 | 0 | 0 |
| Comparative Example 2 | LiNi_{0.65}Co_{0.07}NM_{0.28} | 4.4 | Artificial graphite | 1 | LiDFOB | 1.5 | 5 | 1.5 |
| Example 3-1 | LiNi_{0.65}Co_{0.07}NM_{0.28} | 4.11 | Artificial graphite | 1 | LiDFOB | 0.01 | 1 | 0.01 |
| Example 3-2 | LiNi_{0.65}Co_{0.07}NM_{0.28} | 4.6 | Artificial graphite | 1 | LiDFOB | 1 | 2 | 1 |
| Example 3-3 | LiNi_{0.65}Co_{0.07}NM_{0.28} | 4.8 | Artificial graphite | 1 | LiDFOB | 1.2 | 1.7 | 1.2 |
| Example 4-1 | LiNi_{0.65}Co_{0.07}NM_{0.28} | 4.4 | Artificial graphite | 0.02 | LiDFOB | 0.9 | 3 | 0.018 |
| Example 4-2 | LiNi_{0.65}Co_{0.07}NM_{0.28} | 4.4 | Artificial graphite | 0.8 | LiDFOB | 0.25 | 0.83 | 0.2 |
| Example 4-3 | LiNi_{0.65}Co_{0.07}NM_{0.28} | 4.4 | Artificial graphite | 1.5 | LiDFOB | 0.27 | 0.9 | 0.4 |
| Example 4-4 | LiNi_{0.65}Co_{0.07}NM_{0.28} | 4.4 | Artificial graphite | 2 | LiDFOB | 0.25 | 0.83 | 0.5 |
| Example 4-5 | LiNi_{0.65}Co_{0.07}NM_{0.28} | 4.4 | Artificial graphite | 3 | LiDFOB | 0.8 | 2.67 | 2.4 |
| Example 5-1 | LiNi_{0.55}Co_{0.12}Mn_{0.33} | 4.4 | Artificial graphite | 1 | LiDFOB | 0.6 | 2 | 0.6 |
| Example 5-2 | LiNi_{0.65}Co_{0.07}NM_{0.28} | 4.4 | Artificial graphite+ Natural graphite | 1 | LiDFOB | 0.6 | 2 | 0.6 |

### Test section

### (1) Test for upper-limit potential V₁ of positive electrode active material with respect to the lithium metal

The powder of the positive electrode active material was mixed and stirred with SP and PVDF at a ratio of 90:5:5, and the resulting mixture was uniformly applied on an Al foil with the thickness of 13 micrometers, and then compacted to obtain the positive electrode film with a compaction density of 3.3-3.6g/cm³, during which the humidity was controlled to be <10%; then the positive electrode film was dried in an oven at 100°C for 2h, and the positive electrode film was vacuum dried at 105°C/4h/0.09Mpa before assembling into a button cell. Then the prepared positive electrode film was assembled into an electrode film -lithium sheet CR2430 semi-button battery in a PRS340/11-119-11 Braun glove box, in which 1M LiPF6 EC/EMC/DEC = 3/5/2 was used as the electrolytic solution. The assembled semi-button battery was standing for 3h, and the following test was carried out at 25°C: 0.5C was first used in the voltage range of 2.8-V1 for Charge deintercalation of Li, and then 0.1C was used in the voltage range of V1-2.8 for Discharge intercalation of Li, to obtain the charging-discharging capacity for button battery. The charging and discharging specific capacity was obtained by dividing the charging and discharging capacity for button battery by the mass of the positive electrode active material, and the upper-limit potential V₁ of the positive electrode active material with respect to the lithium metal is the upper-limit potential when the discharging specific capacity was 150-220 mAh/g.

### (2) Test for upper-limit potential V₂ of negative electrode active material with respect to the lithium metal

The powder of the negative electrode active material was mixed and stirred with SP and PVDF at a ratio of 91.6:1.8:6.6, and the resulting mixture was uniformly applied on an Cu foil with the thickness of 8 micrometers, and then compacted to obtain the negative electrode film with a compaction density of 1.4-1.6g/cm³, during which the humidity was controlled to be <10%; then the negative electrode film was dried in an oven at 100°C for 2h, and the negative electrode film was vacuum dried at 105°C/4h/-0.09Mpa before assembling into a button cell. Then the prepared negative electrode film layer was assembled into a negative electrode film layer-lithium sheet CR2430 semi-button battery in a PRS340/11-119-11 Braun glove box, in which 1M LiPF6 EC/EMC/DEC = 3/5/2 was used as the electrolytic solution. The assembled semi-button battery was standing for 5h, and the following test was carried out at 25°C: using 0.05C to 0.005V, 50uA DC to 0.005V, standing for 5min, 10uA DC to 0.005V, standing for 5min, 0.1C CC to V2, standing for 5min, to perform a Charge/Discharge intercalation/deintercalation of Li to obtain the charging-discharging capacity for button battery. The charging and discharging specific capacity was obtained by dividing the charging and discharging capacity for button battery by the mass of the negative electrode active material, and the upper-limit potential V₂ of the negative electrode active material with respect to the lithium metal is the upper-limit potential when the discharging specific capacity was 330-380 mAh/g.

### 3. Test for the performance of secondary batteries

### 3.1 Measurement of cycling life

The secondary battery was charged to 4.35V at 25°C with a constant current of 0.5C, then charged at 4.33V with a constant voltage to a current of 0.05C, and then discharged to 2.8V with a constant current of 1C, which was a charging-discharging cycle. The capacity at the 1^{st} cycle discharge was recorded as 100% and the capacity retention of the battery after 500 cycles was calculated. Capacity retention after 500 cycles of the battery (%) = Discharge capacity at the 500^{th} cycle/ Discharge capacity at the 1^{st} cycle x 100%.

### 3.2 Test for DCR growth rate of Li-ion battery after 500 Cycles at 25°C

DCR test at 25°C before cycles: at 25°C, the prepared fresh cell was charged at 0.5C to 4.35V, followed by constant voltage charging to 0.05C, at which time the voltage was V1; followed by 4C discharging for 30s, the voltage at the end of the discharging was V2, and a sampling interval time of 0.1 second was used, and the discharge DCR1 of the cell at 100% SOC before cycles was (V1 -V2)/I.

DCR test at 25°C after cycles: at 25°C, the above cell cycled at 25°C was charged at 0.5C to 4.35V, followed by constant voltage charging to 0.05C, at which time the voltage was V3; followed by 4C discharging for 30s, the voltage at the end of the discharging was V4, and a sampling interval time of 0.1 second was used, and the discharge DCR2 of the cell at 100% SOC after cycles was (V3 -V4)/I.

### DCR growth rate: the DCR growth rate was (DCR2 - DCR1) / DCR1 * 100%

### Test results

The role played by the present application in improving the cycling life, safety and capacity of secondary batteries was shown in Table 2.

**Table 2**

| Items | Capacity retention after cycles at 25°C @500cycle | DCR growth rate after cycles at 25°C @500cycle |
|---|---|---|
| Example 1 | 92.0% | 50.0% |
| Example 2-1 | 88.0% | 80.0% |
| Example 2-2 | 90.0% | 62.0% |
| Example 2-3 | 91.0% | 55.0% |
| Example 2-4 | 93.0% | 45.0% |
| Example 2-5 | 87.0% | 85.0% |
| Comparative Example 1 | 80.0% | 100.0% |
| Comparative Example 2 | 82.0% | 95.0% |
| Example 3-1 | 92.0% | 46.0% |
| Example 3-2 | 91.0% | 55.0% |
| Example 3-3 | 86.0% | 80.0% |
| Example 4-1 | 90.0% | 60.0% |
| Example 4-2 | 89.0% | 62.0% |
| Example 4-3 | 89.5% | 60.0% |
| Example 4-4 | 90.5% | 58.0% |
| Example 4-5 | 86.0% | 88.0% |
| Example 5-1 | 90.0% | 60.0% |
| Example 5-2 | 89.0% | 65.0% |

As can be seen from Table 2, in the case of Comparative Example 1 without the addition of boron-containing salt, the positive electrode active material was prone to a side reaction in contact with the electrolytic solution, which makes the positive electrode active material destroyed, resulting in a poorer cycling life of the secondary battery; and its interfacial impedance may be higher. Although the boron-containing salt was added to Comparative Ratio 2, the relationship between the mass percentage of the boron-containing salt and the upper-limit potential of the positive electrode active material was A/(V1-4.1) > 4, which makes the boron-containing salt, although be able to play a protective role on the surface of the positive electrode active material, have a high impedance of the CEI film formed by the boron-containing salt, and the boron salt-containing system still had the risk of decomposition, resulting in an unstable system.

By regulating the mass percentage of the boron-containing salt and the upper-limit potential of the positive electrode active material from Example 1 to Examples 2-5 to satisfy 0 < A/(V1-4.1) ≤ 4, and in particular, 0 < A/(V1-4.1) ≤ 3, it was possible to make the boron-containing salt be able to form a dense and stable CEI film on the surface of the positive electrode active material, which can play a good protective effect on the positive electrode active material. Thus the transition metal in the positive electrode active material was not easy to undergo a redox reaction, and the cation mixing in the positive electrode active material was not easy to occur, which was conducive to the de-embedding of the metal ions, thereby improving the cycling life of the secondary battery; the CEI film formed by the boron-containing salt had a dense and uniform film thickness, and had a low interfacial impedance, which was conducive to improving the dynamic performance of the secondary battery.

Examples 3-1 to Examples 3-3 can significantly improve the cycling life and DCR growth rate of the secondary battery by regulating the upper-limit potential V₁ of the positive electrode active material, especially when 4.1 < V₁ ≤ 4.6.

Embodiments 4-1 through 4-5 can significantly improve the cycling life and DCR growth rate of the secondary battery by regulating the upper-limit potential V₂ of the negative electrode active material, especially when 0 < A x V2 ≤ 1.2; 0 < A x V2 ≤ 1.

Example 5-1 and Example 5-2 adjusted the type of the positive electrode active material and the type of the negative electrode active material, respectively, and the results thereof showed that the boron-containing lithium salt can effectively protect the positive electrode active material as well as the negative electrode active material when 0 <A/(V1-4.1) ≤ 4 was satisfied, thereby improving the cycling life and the DCR growth rate of the secondary battery.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the claims.

## Claims

1. A secondary battery comprising:
a positive electrode plate comprising a positive electrode active material; and
an electrolytic solution comprising a boron-containing salt that comprises one or more of the compounds shown in Formula 1, Formula 2, and Formula 3, 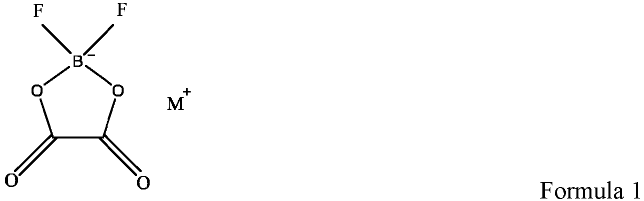 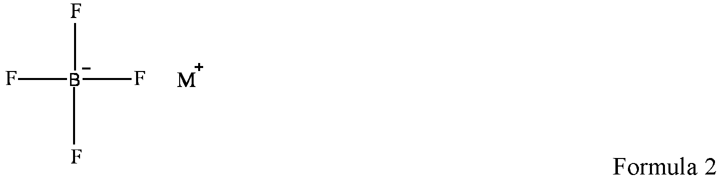 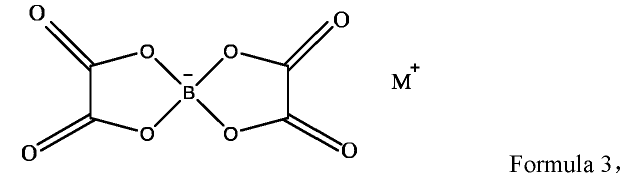
in which M is each independently selected from Li, Na, or K,
wherein a mass percentage of the boron-containing salt based on the total mass of the electrolytic solution is denoted as A%; an upper-limit potential of the positive electrode active material with respect to lithium metal is denoted as V₁ (V); and the secondary battery satisfies: 0 < A/(V₁-4.1) ≤ 4 and V₁ > 4.1; optionally, 0 < A/(V₁-4.1) ≤ 3.

2. The secondary battery according to claim 1, wherein 4.1 < V1 ≤ 4.6.

3. The secondary battery according to claim 1 or 2, wherein the secondary battery further comprises a negative electrode plate, the negative electrode plate comprises a negative electrode active material, an upper-limit potential of the negative electrode active material with respect to lithium metal is recorded as V₂ (V); the secondary battery satisfies: 0 < A × V₂ ≤ 1.2; optionally, 0 < A × V₂ ≤ 1.

4. The secondary battery according to claim 3, wherein 0.02 ≤ V2 ≤ 2.5; optionally, 0.1 ≤ V2 ≤ 2.

5. The secondary battery according to claim 3 or 4, wherein the negative electrode active material comprises at least one of artificial graphite, natural graphite, soft carbon, hard carbon, and silicon-based materials.

6. The secondary battery according to any one of claims 1 to 5, wherein 0 < A ≤ 2.

7. The secondary battery according to any one of claims 1 to 6, wherein the boron-containing salt comprises the compound shown in Formula 1, the compound shown in Formula 2, and the compound shown in Formula 3;
optionally, the compound shown in Formula 1 comprises lithium difluorooxalate borate and/or sodium difluorooxalate borate; and/or
the compound shown in Formula 2 comprises lithium tetrafluoroborate and/or sodium tetrafluoroborate; and/or
the compound shown in Formula 3 comprises lithium bis(oxalate)borate and/or sodium bis(oxalate)borate.

8. The secondary battery according to any one of claims 1 to 7, wherein the electrolytic solution further comprises one or more of lithium hexafluorophosphate LiPF₆, lithium perchlorate LiClO₄, lithium hexafluoroarsenate LiAsF₆, lithium bisfluorosulfonimide LiFSI, lithium bis(trifluoromethylsulfonyl)imide LiTFSI, lithium trifluoromethane sulfonate LiTFS, lithium difluorophosphate LiPO₂F₂, lithium difluorodioxalate phosphate LiDFOP, lithium tetrafluorooxalate phosphate LiTFOP, sodium hexafluorophosphate NaPF₆, sodium bifluorosulfonimide NaFSI, sodium difluorophosphate NaPO₂F₂, sodium bis(trifluoromethylsulfonyl)imide NaTFSI, and sodium fluorosulfonate NaFSO₃.

9. The secondary battery according to any one of claims 1 to 8, wherein the electrolytic solution further comprises a film-forming additive, the film-forming additive comprising one or more of a carbonate additive, a sulfate additive, a sulfite additive, a phosphate additive, and a polynitrile additive;
optionally, based on the total mass of the electrolytic solution, a mass percentage d of the film-forming additive satisfies: 0.5% ≤ d ≤ 10%; optionally, 1% ≤ d≤6%.

10. The secondary battery according to claim 9, wherein,
the carbonate additive comprises a cyclic carbonate additive and/or a linear carbonate additive; optionally, the cyclic carbonate additive comprises one or more of vinylidene carbonate VC, fluoroethylene carbonate FEC, difluoroethylene carbonate DFEC, vinyl ethylene carbonate VEC, and dicaprylyl carbonate CC; and/or the linear carbonate additives comprises one or more of allyl ethyl carbonate AEC, diphenyl carbonate DPC, methyl allyl carbonate PMC, and vinyl acetate VA; and/or
the sulfate additive includes a cyclic sulfonate additive and/or a hydrocarbyl sulfate additive; optionally, the cyclic sulfonate additive includes one or more of 1,3-propane sultone PS, propene sultone PES, and 3-fluoro-1,3-propane sultone FPS; and/or the hydrocarbyl sulfate additive includes one or more of ethylene sulfate DTD, diethyl sulfate DES, and dimethyl sulfate DMS; and/or
the sulfite additive includes ethylene sulfite ES and/or vinyl ethylene sulfite VES; and/or
the phosphate additive comprises one or more of tris(trimethylsilane) phosphate, triallyl phosphate, trimethyl phosphate, and triethyl phosphate; and/or
the polynitrile additive comprises one or more of toluene diisocyanate, hexamethylene diisocyanate, adiponitrile, toluene diisocyanate, hexamethylene diisocyanate.

11. The secondary battery according to any one of claims 1 to 10, wherein,
the electrolytic solution further comprises an organic solvent, and the organic solvent comprises one or more of ethylene carbonate EC, propylene carbonate PC, methyl ethyl carbonate EMC, diethyl ethyl carbonate DEC, dimethyl methyl carbonate DMC, dipropyl carbonate DPC, methyl propyl carbonate MPC, ethyl propyl carbonate EPC, butylene carbonate BC, methyl formate MF, methyl acetate MA, ethyl acetate EA, propyl acetate PA, methyl propionate MP, ethyl propionate EP, propyl propionate PP, methyl butyrate MB, ethyl butyrate EB, 1,4-butyrolactone GBL, sulfolane SF, dimethyl sulfone MSM, methyl ethyl sulfone EMS and diethyl sulfone ESE.

12. The secondary battery according to any one of claims 1 to 11, wherein the positive electrode active material comprises a compound having a molecular formula LiNiₓCo_{y}M_{1-x-y}, wherein M represents one or more of Mn, Fe, Mg, Al, Cu, and Ti, x ≥ 0.5, 0 ≤ y ≤ 0.2, and x + y ≤ 1.

13. A battery module, comprising the secondary battery according to any one of claims 1 to 12.

14. A battery pack, comprising the battery module according to claim 13.

15. An electrical device, comprising the secondary battery according to any one of claims 1 to 12, the battery module according to claim 13, or the battery pack according to claim 14.
